(19) Europäisches Patentamt
European Patent Office
Office européen des brevets

(11) **EP 2 790 957 B1**

(12) **FASCICULE DE BREVET EUROPEEN**

(45) Date de publication et mention de la délivrance du brevet:
**09.03.2016 Bulletin 2016/10**

(21) Numéro de dépôt: **12794729.9**

(22) Date de dépôt: **04.12.2012**

(51) Int Cl.:
*B60L 11/18* (2006.01)          *H02J 7/02* (2006.01)
*H02J 5/00* (2016.01)

(86) Numéro de dépôt international:
**PCT/EP2012/074342**

(87) Numéro de publication internationale:
**WO 2013/087451 (20.06.2013 Gazette 2013/25)**

(54) **PROCEDE DE CHARGE SANS CONTACT D'UNE BATTERIE D'UN VEHICULE AUTOMOBILE ELECTRIQUE**

VERFAHREN ZUR BERÜHRUNGSLOSEN LADUNG DER BATTERIE EINES ELEKTRISCHES AUTOMOBILS

METHOD FOR THE CONTACTLESS CHARGING OF THE BATTERY OF AN ELECTRIC AUTOMOBILE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2011 FR 1161536**

(43) Date de publication de la demande:
**22.10.2014 Bulletin 2014/43**

(73) Titulaire: **Renault S.A.S.**
**92100 Boulogne-Billancourt (FR)**

(72) Inventeurs:
• **HOUIVET, Jeanne**
  **F-75015 Paris (FR)**
• **CREGUT, Samuel**
  **F-78470 Saint Rémy lès Chevreuses (FR)**

(56) Documents cités:
**EP-A1- 2 317 624          EP-B1- 0 700 574**
**US-A1- 2011 291 606**

**Description**

La présente invention concerne la charge sans contact d'une batterie d'un véhicule automobile électrique ou hybride.

La charge est effectuée par induction magnétique : dans un emplacement appelé « zone de charge », on fait circuler un courant dans un circuit au sol possédant une bobine émettrice - ou primaire, ce qui fournit la puissance à une bobine réceptrice - ou secondaire, d'un véhicule automobile électrique ou hybride, ci après simplement dénommé véhicule.

Le phénomène d'induction magnétique n'a lieu que si les bobines primaire et secondaire sont suffisamment proches l'une de l'autre, et la puissance transmise dépend en partie de la résonance du circuit au sol. Bien que le véhicule soit immobile lorsqu'il est en charge, la fréquence du courant circulant dans le circuit doit être adaptée en fonction de la position du secondaire par rapport au primaire, donc de la position du véhicule dans la zone de charge par rapport au primaire (immobile). Ceci afin d'atteindre la résonance du système.

Aussi plus précisément, selon un premier de ses objets l'invention concerne un procédé de charge sans contact d'une batterie d'un véhicule automobile électrique par induction magnétique entre un circuit résonant émetteur comprenant une bobine émettrice d'un dispositif de charge et un circuit résonant récepteur du véhicule comprenant une bobine réceptrice, le véhicule étant positionné au-dessus de la bobine émettrice, de sorte à pouvoir assurer un bon couplage magnétique entre la bobine émettrice et la bobine réceptrice, le procédé comprenant des étapes consistant à :

- commander l'alimentation électrique ainsi que les consignes d'un onduleur aux bornes duquel est relié la bobine émettrice selon une fréquence variable,
- mesurer dans un circuit analogique la valeur du courant et de la tension aux bornes de la bobine émettrice, et
- calculer le déphasage entre le courant et la tension.

Un tel procédé est connu de l'homme du métier, notamment par l'exemple qu'en donne le document de l'état de la technique antérieure EP2317624 qui vise notamment à comparer les phases entre la tension et le courant pour piloter la fréquence d'excitation, dans un circuit qui comporte un module « comparateur de phase », à partir de signaux logiques images du signe du courant et de la tension, pour générer un signal dont l'amplitude variable fait varier la fréquence d'excitation par un module VCO pour « Voltage Controlled Oscillator » en anglais, c'est-à-dire un oscillateur contrôlé en tension qui génère un signal dont la fréquence dépend de la tension d'entrée.

D'autres solutions consistent à faire varier la fréquence du circuit de charge en fonction de la puissance reçue au secondaire ; mais dans ce cas, la batterie du véhicule est susceptible de refuser un trop grand transfert de puissance.

Toutefois, de telles solutions sont complexes et coûteuses à mettre en oeuvre.

La présente invention a pour but de remédier à ces inconvénients en proposant une solution simple et essentiellement numérique.

Avec cet objectif en vue, le procédé selon l'invention, par ailleurs conforme au préambule cité ci-avant, est essentiellement caractérisé en ce qu'il comprend en outre des étapes consistant à :

- convertir en valeur numérique le déphasage, et
- asservir par un traitement numérique la fréquence des consignes de commutation envoyées à l'onduleur à la valeur du déphasage.

Grâce à l'invention, la détection de la différence de phase entre tension et courant est très simple au niveau matériel (*hardware*), elle minimise le nombre de composants électroniques hardware, et donc le coût de mise en oeuvre, une partie essentielle étant faite en numérique. Préférentiellement la valeur de déphasage correspond à la résonance du système.

Grâce à ces caractéristiques, le réglage des performances dans la partie numérique est facile et paramétrable.

Grâce à l'invention, on peut rechercher la résonance à puissance transférée très réduite, ce qui est utile car une batterie de véhicule est susceptible de refuser un trop grand transfert de puissance.

Dans un mode de réalisation, on prévoit des étapes consistant à

- établir la valeur absolue du déphasage,
- calculer la dérivée de la valeur absolue du déphasage,
- calculer le signe de la dérivée, et
- estimer la valeur du déphasage réel en fonction de la valeur absolue du déphasage, de la dérivée, et de son signe.

Grâce à cette caractéristique, il est possible par traitement numérique simple de savoir si la fréquence du circuit est supérieure ou inférieure à la fréquence de résonance.

Dans un mode de réalisation, on prévoit une étape consistant à asservir la fréquence variable à une valeur de déphasage inférieure à une valeur prédéterminée.

Ce qui permet de minimiser le déphasage entre la phase du courant et la phase de la tension. Grâce à cette caractéristique on a une robustesse du système par l'utilisation d'une boucle fermée sur la phase.

Grâce à l'invention, l'asservissement en fréquence est mise en oeuvre par une boucle logicielle, ce qui permet une souplesse complète de mise au point de l'asservissement (fréquence complètement variable en fonction du besoin).

Avantageusement, l'asservissement est mis en oeuvre par un régulateur proportionnel intégral dont la valeur du gain proportionnel et/ou la valeur du gain intégral sont choisis de sorte à optimiser la vitesse de convergence de la fréquence variable vers la valeur prédéterminée.

Dans un mode de réalisation, on prévoit au moins une étape de filtrage de la valeur absolue du déphasage.

Dans un mode de réalisation, on prévoit des étapes consistant à

- comparer la dérivée de la valeur absolue du déphasage à une valeur seuil haut, et à une valeur seuil bas,
- émettre un signal représentatif du signe du signal de déphasage entre le courant et la tension,

dans lequel

- si la dérivée de la valeur absolue du déphasage est supérieure à la valeur seuil haut alors le signe du signal de déphasage entre le courant et la tension est considéré comme positif, et
- si la dérivée de la valeur absolue du déphasage est inférieure à la valeur seuil bas alors le signe du signal de déphasage entre le courant et la tension est considéré comme négatif.

Selon un autre de ses objets, l'invention concerne un programme d'ordinateur, comprenant des instructions de code de programme pour l'exécution des étapes du procédé selon l'invention lorsque ledit programme est exécuté sur un ordinateur.

Selon l'invention, l'élaboration de la phase est construite en partie en analogique, et en partie en numérique (par logiciel) ; ceci permet de réduire le nombre de composants analogiques, donc de réduire le coût et d'augmenter la fiabilité du système, alors qu'une solution purement analogique est très complexe à mettre en oeuvre.

Enfin, l'invention concerne également un système de charge sans contact par induction magnétique d'une batterie d'un véhicule automobile électrique dont un circuit résonant récepteur comprend une bobine réceptrice, le système comprenant :

- un circuit résonant émetteur comprenant une bobine émettrice,
- un onduleur aux bornes duquel est reliée la bobine émettrice,
- une carte mère analogique et numérique sur laquelle sont disposés un circuit analogique et une carte de contrôle, le courant et la tension aux bornes de la bobine émettrice étant mesurés et traités par le circuit analogique qui calcule la valeur absolue (ABS_PH_ANA) du déphasage entre le courant et la tension, le signal de déphasage (ABS_PH_ANA) issu du circuit analogique étant injecté en entrée de la carte de contrôle numérique qui émet en sortie une consigne de fréquence (N_PWM) vers l'onduleur, et
- un convertisseur analogique/numérique pour convertir en valeur numérique le déphasage,

la carte de contrôle étant configurée pour asservir par un traitement numérique la fréquence des consignes de commutation envoyées à l'onduleur à la valeur du déphasage, de sorte à pouvoir assurer un couplage magnétique entre la bobine émettrice et la bobine réceptrice lorsque le véhicule est positionné au-dessus de la bobine émettrice.

D'autres caractéristiques et avantages de la présente invention apparaîtront plus clairement à la lecture de la description suivante donnée à titre d'exemple illustratif et non limitatif et faite en référence aux figures annexées dans lesquelles :

- la figure 1 illustre un schéma global d'une charge sans contact d'un véhicule,
- la figure 2 illustre certains détails électroniques du schéma de la figure 1,
- la figure 3 illustre un mode de réalisation d'un circuit de mesure du déphasage en valeur absolue entre la tension et le courant,
- la figure 4 illustre un mode de réalisation d'une partie du calculateur (processeur) selon l'invention,
- la figure 5 illustre un mode de réalisation du bloc B3 de la figure 4,
- la figure 6 illustre l'évolution du signal de déphasage en fonction de la fréquence variable,
- la figure 7A et la figure 7B illustrent de manière synchrone respectivement l'évolution de la fréquence de résonance et l'évolution du signal de déphasage (signé et non en valeur absolue) en fonction du temps en cas de mouvement relatif entre le primaire et le secondaire,
- la figure 8 illustre l'évolution du signal de déphasage et sa valeur absolue en fonction de la fréquence variable,

- la figure 9 illustre un mode de réalisation du procédé selon l'invention.

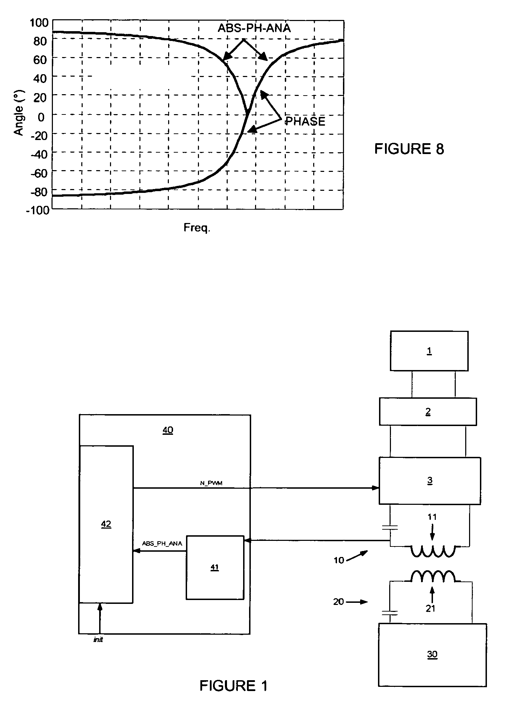

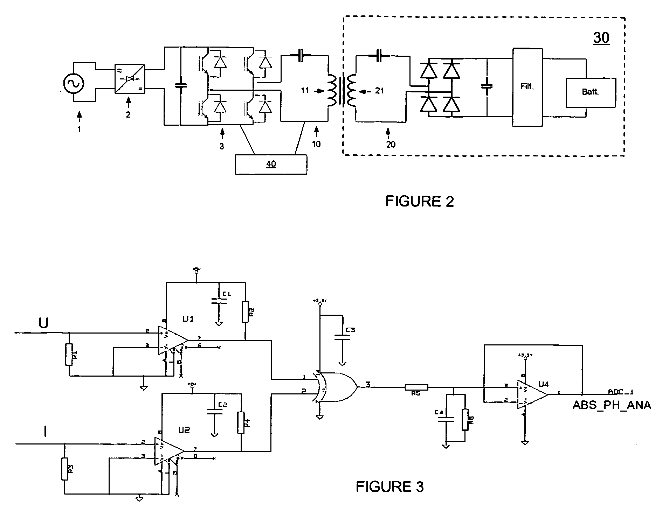

La figure 1 illustre le schéma général d'une charge sans contact d'un véhicule, et la figure 2 illustre certains détails électroniques de ce schéma général, incluant un filtre Filt.

Une source électrique 1, typiquement un réseau électrique, émet un courant sinusoïdal vers un redresseur 2. Le redresseur 2 permet d'alimenter un onduleur 3 dont la fréquence est réglable. L'onduleur 3 alimente un circuit de charge 10, résonant, dit circuit LC, comprenant une bobine de charge 11 également appelée bobine émettrice ou encore primaire.

Le primaire 11 est susceptible de charger la batterie d'un véhicule 30 équipé d'un circuit récepteur 20, résonant, comprenant une bobine réceptrice 21 également appelée bobine secondaire ou simplement « secondaire ».

Le circuit de charge 10 et le circuit récepteur 20 sont configurés pour résonner à la même fréquence de résonance.

Or la fréquence de résonance dépend de la position relative du primaire et du secondaire.

Pour piloter la valeur de la fréquence de résonance, il est proposé de n'agir qu'au niveau de la charge, c'est-à-dire pas au niveau de la position géographique du véhicule. Pour ce faire, on agit au niveau de l'onduleur 3 dont la fréquence est pilotée par un régulateur.

Le courant U et la tension I aux bornes du primaire 11 sont mesurés et traités par un circuit analogique 41 qui calcule la valeur absolue ABS_PH_ANA du déphasage entre le courant et la tension, ci-après dénommé signal de déphasage ou « déphasage ».

Le signal de déphasage ABS_PH_ANA issu du circuit analogique 41 est injecté en entrée d'une carte de contrôle 42 numérique qui émet en sortie une consigne de fréquence image de N_PWM vers l'onduleur 3.

En l'espèce, le circuit analogique 41 et la carte de contrôle 42 sont disposés sur une carte mère 40 analogique et numérique.

Dans un circuit résonant, la tension et le courant sont en phase à la résonance. On vise ici à effectuer un transfert de puissance entre le primaire 11 et le secondaire 21 à la résonance.

La figure 2 présente de façon plus précise les différents étages de puissance, et la figure 1 représente en détail notamment la carte mère ou bloc 40 qui correspond au contrôle.

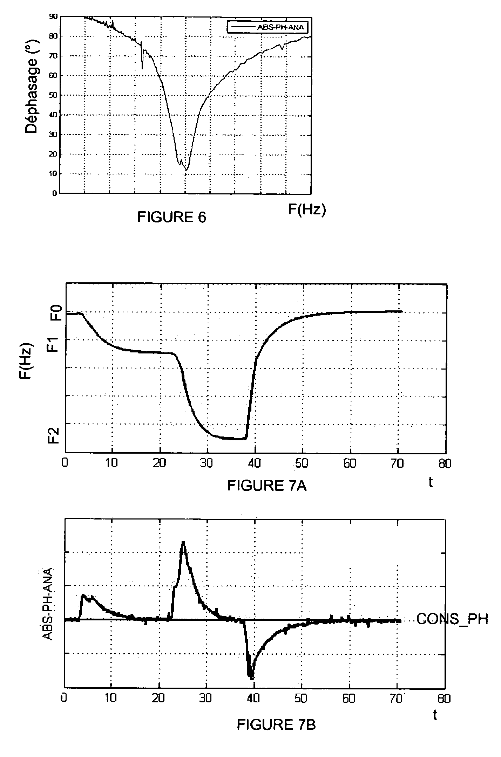

Comme illustré figure 6, la différence de phase entre la tension U et le courant I dans le circuit de charge 10 est quasi nulle à la résonance. La différence de phase est négative avant la fréquence de résonance, voisine de zéro à la résonance et positive au-delà de la résonance (le phénomène étant inversé si on établit la différence de phase entre le courant I et la tension U dans le circuit de charge). Ainsi, la valeur absolue d'un signal correspondant à la différence de phase entre la tension et le courant dans le circuit de charge - dit signal de valeur absolue - passe par un point d'inflexion quasi nul à la résonance.

Dans le cas illustré à la figure 6, qui représente la valeur absolue du déphasage en fonction de la fréquence, la dérivée temporelle du signal de déphasage ABS_PH_ANA est donc négative avant la fréquence de résonance, et positive au-delà. On a une correspondance entre le signe de la différence de phase et le signe de la dérivée du signal de déphasage ABS_PH_ANA.

La figure 8 représente elle la valeur réelle - c'est-à-dire avec le signe - du déphasage en fonction de la fréquence.

Pour piloter l'établissement de la fréquence de l'onduleur 3, on prévoit un traitement analogique qui permet de fournir la valeur du déphasage ABS_PH_ANA, et un traitement numérique qui permet de fournir une estimation du signe de la différence de phase, notée PH_EST.

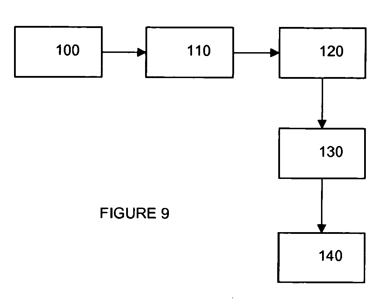

Comme représenté sur la figure 9, au niveau analogique, la mesure 100 de la tension U est comparée à la mesure du courant I pour calculer 110 la valeur du déphasage ABS_PH_ANA entre ces deux grandeurs. A cet effet, un circuit 41 tel qu'illustré figure 3 peut être mis en oeuvre.

Dans la figure 3, U1 et U2 sont des comparateurs de la mesure de la tension U (signal créneau) et la mesure de l'intensité I (signal sinusoïdal). En sortie de ces comparateurs, on a des signaux créneaux positifs déphasés l'un par rapport à l'autre et mis en entrée d'une porte OU exclusif dont la sortie est filtrée, pour récupérer la valeur absolue du déphasage.

Le signal de déphasage ABS_PH_ANA (analogique) est dirigé vers un convertisseur analogique / digital en entrée d'une carte de contrôle numérique 42, pour convertir 120 en valeur numérique le déphasage.

Au niveau numérique, un traitement numérique permet d'asservir 130 la fréquence variable de l'onduleur à la valeur du déphasage. A cet effet, la carte de contrôle 42 comprend un calculateur, et éventuellement le convertisseur analogique / digital mentionné ci-avant.

Un signal d'initialisation init (booléen) est dirigé vers une autre entrée du calculateur. La valeur du signal d'initialisation init indique l'ordre d'effectuer le transfert de puissance ou non. Ce qui permet de commander 140 l'alimentation électrique de l'onduleur 3 aux bornes duquel est relié la bobine émettrice 11 selon une fréquence variable, image de N_PWM.

A cet effet, le calculateur comprend un régulateur, en l'espèce un régulateur par modulation de largeur d'impulsions PWM, dont le signal de sortie N_PWM correspond directement à la période de hachage de l'onduleur de tension 3. La valeur du signal N_PWM correspond à une valeur de registre PWM et la période de hachage T de l'onduleur 3 est liée à la valeur du signal N_PWM par la relation :

$$T = N\_PWM / 10^8$$

Cette formule étant liée aux cycles d'horloge de la carte de contrôle 2 (avec une fréquence de l'horloge égale à 100MHz).

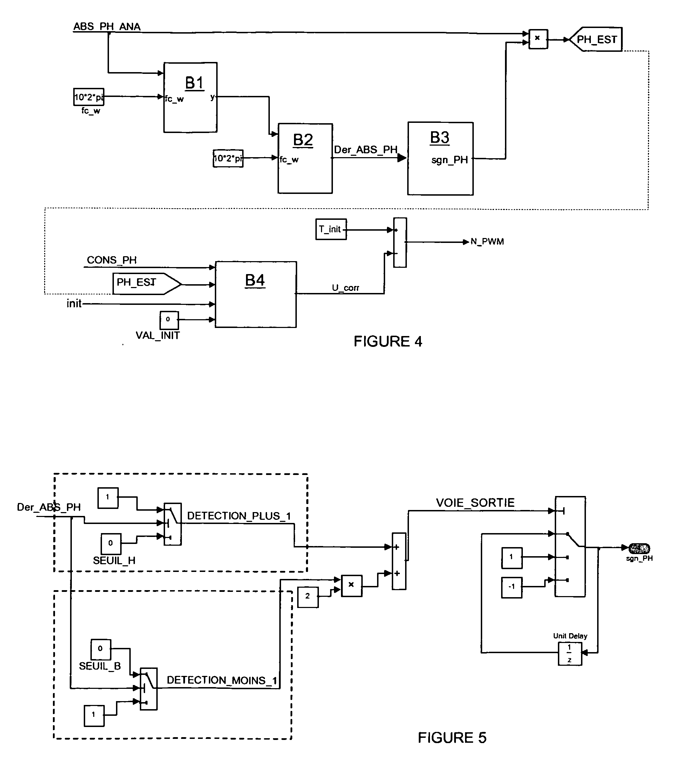

Un mode de réalisation d'une partie au moins du calculateur est illustrée figure 4. Il comprend quatre blocs B1 à B4.

Les blocs B1, B2 et B3 permettent de construire, à partir du déphasage analogique ABS_PH_ANA, le signal PH_EST représentatif du signe du déphasage.

Le bloc B1 est un filtre qui réalise une fonction de filtrage, en l'espèce un filtre passe bas d'ordre 1. Le paramètre de réglage (pulsation de coupure) est fc_w dont une valeur typique est par exemple de 628 rad/s. La fonction du bloc B1 est de supprimer les bruits de mesures issus du signal analogique ABS_PH_ANA.

Le bloc B2 est un dérivateur, en l'espèce un filtre dérivateur, qui réalise une fonction de dérivation. De préférence, il réalise également un autre filtre d'ordre 1 dont le paramètre de réglage est fc_w dont une valeur typique est par exemple également de 628 rad/s. En sortie du bloc B2 est généré un signal Der_ABS_PH, image de la dérivée (filtrée) du signal d'entrée ABS_PH_ANA.

Le bloc B3 élabore le signal sgn_PH représentatif du signe de la dérivée Der_ABS_PH. Un exemple de réalisation du bloc 3 est illustré figure 5.

Le signal Der_ABS_PH issu du bloc B2 est comparé à une première valeur seuil notée Seuil_H : si la valeur du signal de dérivée Der_ABS_PH est supérieure à ce premier seuil, alors on considère que le signal d'origine (c'est-à-dire du signal de déphasage hors valeur absolue) est positif et on détecte le passage à une valeur positive ; le signal DETECTION_PLUS_1 issu de la comparaison vaut 1.

Le signal Der_ABS_PH issu du bloc B2 est également comparé à une deuxième valeur seuil notée Seuil_B : si la valeur du signal de dérivée Der_ABS_PH est inférieure à ce deuxième seuil, alors on considère que le signal d'origine est négatif et on détecte le passage à une valeur négative ; le signal DETECTION_MOINS_1 issu de la comparaison vaut 1.

Seuil_H et Seuil_B constituent deux paramètres réglables. Des valeurs typiques sont de 10 et -10 (un des seuils est positif, l'autre est négatif) ; (une valeur trop basse pour Seuil_B risque de fausser les détections, et une valeur trop haute pour Seuil_H risque de ne pas détecter les changements de signe).

Le signal DETECTION_MOINS_1 est multiplié par une valeur prédéterminée, en l'espèce la valeur 2, dont le résultat est additionné au signal DETECTION_PLUS_1 pour former le signal VOIE_SORTIE selon la logique suivante :

VOIE_SORTIE = 0 si pas de détection de changement de signe,
VOIE_SORTIE = 1 si DETECTION_PLUS_1 = 1,
VOIE_SORTIE = 2 si DETECTION_MOINS_1 = 1.

Le signal de sortie sgn_PH représentatif du signe du signal de déphasage est ensuite facilement construit à l'aide d'un commutateur multiports « Multiport Switch » par exemple selon la logique suivante :

Si VOIE_SORTIE = 0 alors on conserve le signe calculé lors du dernier appel du bloc,
VOIE_SORTIE = 1, alors sgn_PH = 1,
VOIE_SORTIE = 2, alors sgn_PH = -1.

Le signal de sortie sgn_PH peut également être bouclé en entrée via un bloc 1/Z « unit delay » (figure 5) qui permet de récupérer la dernière valeur du signal sgn_PH. Dans le cas où on n'a pas détecté de changement, on conserve alors la valeur précédente.

Le signal de sortie sgn_PH représentatif du signe du signal de déphasage est multiplié au signal de déphasage ABS_PH_ANA pour donner le signal d'estimation PH_EST sur une des entrées du bloc 4.

Le bloc 4 réalise une régulation en boucle fermée ; par exemple un régulateur classique du type P-I (Proportionnel Intégral).

Dans un mode de réalisation, le principe de l'asservissement est de partir d'une fréquence initiale basse, déterminée par la valeur initiale, qui correspond par exemple à une valeur initiale typique T_init égale à 9000. Cette valeur est homogène à un temps, pour revenir en secondes on divise par $10^8$ avec une fréquence de l'horloge égale à 100MHz.

Cette valeur initiale T_init est paramétrable.

Ainsi si la valeur initiale vaut 9000, la fréquence initiale de l'onduleur 3 vaut alors :

$$\texttt{Fréquence = 10\^{}8/9000 = 11\ 111\ Hz.}$$

Lorsque le régulateur est activé, la commande de la fréquence de l'onduleur 3 est fixée par la valeur du signal N_PWM suivant la relation :

$$\texttt{N\_PWM = T\_init - U\_Corr}$$

U_Corr étant la sortie du régulateur P-I (négative au départ).

Ainsi la valeur du signal N_PWM va progressivement diminuer et la fréquence de l'alimentation va progressivement augmenter jusqu'à la valeur souhaitée de résonance.

Les paramètres de réglages du correcteur P-I (non représentés sur la figure) sont :

- le gain proportionnel Kp,
- le gain intégral Ki.

Ces deux paramètres permettent de régler la vitesse de convergence de la fréquence variable vers la résonance.

La première entrée du bloc B4 est une valeur de consigne de déphasage CONS_PH que l'on souhaite atteindre. Du fait des différentes imperfections du système de traitement analogique permettant de construire ABS_PH_ANA, le signal de déphasage réel ne descend jamais complètement à zéro, comme indiqué sur la figure 6. De ce fait la consigne ne peut pas être fixée à 0 exactement. Une valeur typique est de 20° par exemple.

La deuxième entrée correspond à la grandeur à réguler, il s'agit du déphasage reconstruit avec son signe :

$$\texttt{PH\_EST = ABS\_PH\_ANA x sgn\_PH}$$

La troisième entrée correspond au signal init (signal booléen indiquant un état d'initialisation) ; lorsque le signal vaut 1 le signal signifie un état d'attente pour lequel on ne cherche pas à transférer de puissance, et que la sortie du contrôleur PI est égale à la valeur fixée par la quatrième entrée, donc ici une valeur nulle.

Lorsque le signal init vaut 0, la sortie du contrôleur PI va progressivement diminuer (car la valeur initiale est de l'ordre de -90°) ; le correcteur va ainsi diminuer progressivement N_PWM en partant de la valeur fixée par T_init, jusqu'à la valeur souhaitée (la valeur proche de la résonance).

La quatrième entrée correspond à une valeur initiale VAL_INITIALE en l'espèce fixée à 0. Aucune consigne n'est envoyée tant que l'ordre de charge n'a pas été donné c'est-à-dire que le signal « init » n'est pas passé à 0.

La figure 7A et la figure 7B illustrent de manière synchrone respectivement l'évolution de la fréquence de résonance et l'évolution du signal de déphasage en fonction du temps, lors d'un essai dans lequel le récepteur (véhicule) et la charge subissent plusieurs mouvements relatifs, ce qui créé des perturbations dans le transfert de puissance.

Le primaire est initialement bien en face du secondaire ; l'asservissement impose une fréquence initiale F0 (en l'espèce environ 21 kHz).

Le secondaire est d'abord bougé dans un sens une première fois. La fréquence est diminuée, progressivement stabilisée à une fréquence F1 (en l'espèce environ 20.5 kHz). Ce mouvement augmente temporairement le déphasage (figure 7B), celui-ci se stabilisant ensuite vers sa valeur de consigne CONS_PH.

Le secondaire est alors bougé dans le même sens une deuxième fois. La fréquence est encore diminuée, progressivement stabilisée à une fréquence F2 (en l'espèce environ 20 kHz). Ce mouvement augmente à nouveau temporairement le déphasage (figure 7B), celui-ci se stabilisant ensuite vers sa valeur de consigne CONS.

Le secondaire est alors bougé dans le sens contraire pour le ramener à la position initiale. L'asservissement ramène la fréquence à une valeur proche de la valeur initiale F0 et ce mouvement diminue temporairement le déphasage (figure 7B), celui-ci se stabilisant ensuite vers sa valeur de consigne CONS_PH.

A noter que l'asservissement a été réglé ici assez peu dynamique, mais qu'il est possible d'accélérer de façon significative la rapidité de l'asservissement.

**Revendications**

1. Procédé de charge sans contact d'une batterie (Batt) d'un véhicule automobile électrique (30) par induction magnétique entre un circuit résonant émetteur (10) comprenant une bobine émettrice (11) d'un dispositif de charge et un circuit résonant récepteur (20) du véhicule comprenant une bobine réceptrice (21), le véhicule (30) étant positionné au-dessus de la bobine émettrice (11), de sorte à pouvoir assurer un couplage magnétique entre la bobine émettrice (11) et la bobine réceptrice (21), le procédé comprenant des étapes consistant à :

   - commander (140) l'alimentation électrique ainsi que les consignes d'un onduleur (3) aux bornes duquel est reliée la bobine émettrice (11) selon une fréquence variable,
   - mesurer (100) dans un circuit analogique la valeur du courant (U) et de la tension (I) aux bornes de la bobine émettrice (11), et
   - calculer (110) le déphasage entre le courant (U) et la tension (I),

   **caractérisé en ce qu'**il comprend en outre des étapes consistant à :

   - convertir (120) en valeur numérique le déphasage, et
   - asservir (130) par un traitement numérique la fréquence des consignes de commutation envoyées à l'onduleur à la valeur du déphasage.

2. Procédé selon la revendication 1, comprenant des étapes consistant à

   - établir la valeur absolue du déphasage (ABS_PH_ANA),
   - calculer la dérivée (Der_ABS_PH) de la valeur absolue du déphasage,
   - calculer le signe de la dérivée (Sgn_DER), et
   - estimer la valeur du déphasage réel (PH_EST) en fonction de la valeur absolue du déphasage (ABS_PH_ANA), de la dérivée (Der_ABS_PH), et de son signe (Sgn_DER).

3. Procédé selon l'une quelconque des revendications précédentes, comprenant une étape consistant à asservir la fréquence de l'onduleur (3) à une valeur de déphasage inférieure à une valeur prédéterminée (CONS_PH).

4. Procédé selon la revendication 3, dans lequel l'asservissement par un traitement numérique (130) est mis en oeuvre par un régulateur proportionnel intégral dont la valeur du gain proportionnel et la valeur du gain intégral sont choisis de sorte à optimiser la vitesse de convergence de la fréquence de l'onduleur (3) vers la valeur prédéterminée (CONS_PH).

5. Procédé selon l'une quelconque des revendications 2 à 4, comprenant au moins une étape de filtrage de la valeur absolue du déphasage (ABS_PH_ANA).

6. Procédé selon l'une quelconque des revendications 2 à 5, comprenant des étapes consistant à

   - comparer la dérivée de la valeur absolue du déphasage (Der_ABS_PH) à une valeur seuil haut (SEUIL_H), et à une valeur seuil bas (SEUIL_B),
   - émettre un signal (Sgn_PH) représentatif du signe du signal de déphasage entre le courant et la tension, dans lequel

      - si la dérivée (Der_ABS_PH) de la valeur absolue du déphasage est supérieure à la valeur seuil haut (SEUIL_H) alors le signe du signal de déphasage entre le courant et la tension est considéré comme positif, et
      - si la dérivée (Der_ABS_PH) de la valeur absolue du déphasage est inférieure à la valeur seuil bas (SEUIL_B) alors le signe du signal de déphasage entre le courant et la tension est considéré comme négatif.

7. Programme d'ordinateur, comprenant des instructions de code de programme pour l'exécution des étapes du procédé selon l'une quelconque des revendications précédentes, lorsque ledit programme est exécuté sur un ordinateur.

8. Système de charge sans contact par induction magnétique d'une batterie (Batt) d'un véhicule automobile électrique (30) dont un circuit résonant récepteur (20) comprend une bobine réceptrice (21), le système comprenant :

- un circuit résonant émetteur (10) comprenant une bobine émettrice (11),
- un onduleur (3) aux bornes duquel est reliée la bobine émettrice (11), characterisé par
- une carte mère (40) analogique et numérique sur laquelle sont disposés un circuit analogique (41) et une carte de contrôle (42), le courant (U) et la tension (I) aux bornes de la bobine émettrice (11) étant mesurés et traités par le circuit analogique (41) qui calcule la valeur absolue (ABS_PH_ANA) du déphasage entre le courant et la tension, le signal de déphasage (ABS_PH_ANA) issu du circuit analogique (41) étant injecté en entrée de la carte de contrôle (42) numérique qui émet en sortie une consigne de fréquence (N_PWM) vers l'onduleur (3), et
- un convertisseur analogique/numérique pour convertir en valeur numérique le déphasage,

la carte de contrôle (42) étant configurée pour asservir par un traitement numérique la fréquence des consignes de commutation envoyées à l'onduleur (3) à la valeur du déphasage, de sorte à pouvoir assurer un couplage magnétique entre la bobine émettrice (11) et la bobine réceptrice (21) lorsque le véhicule (30) est positionné au-dessus de la bobine émettrice (11).

## Patentansprüche

1. Verfahren zum kontaktlosen Laden einer Batterie (Batt) eines elektrischen Kraftfahrzeugs (30) durch magnetische Induktion zwischen einem Sender-Resonanzkreis (10), der eine Senderspule (11) einer Ladevorrichtung enthält, und einem Empfänger-Resonanzkreis (20) des Fahrzeugs, der eine Empfängerspule (21) enthält, wobei das Fahrzeug (30) über der Senderspule (11) positioniert ist, derart, dass eine magnetische Kopplung zwischen der Senderspule (11) und der Empfängerspule (21) sichergestellt werden kann, wobei das Verfahren die folgenden Schritte umfasst, die darin bestehen:

   - die elektrische Versorgung sowie die Stellwerte eines Wechselrichters (3), mit dessen Anschlüssen die Senderspule (11) verbunden ist, entsprechend einer veränderlichen Frequenz zu steuern (140),
   - in einer analogen Schaltung den Wert des Stroms (U) und der Spannung (I) an den Anschlüssen der Senderspule (11) zu messen (100) und
   - die Phasenverschiebung zwischen dem Strom (U) und der Spannung (I) zu berechnen (110),

   dadurch gekennzeichnet, dass es außerdem die folgenden Schritte umfasst, die darin bestehen:

   - die Phasenverschiebung in einen digitalen Wert umzusetzen (120) und
   - durch eine digitale Verarbeitung die Frequenz der Kommutationsstellwerte, die an den Wechselrichter geschickt werden, auf den Phasenverschiebungswert zu regeln (130).

2. Verfahren nach Anspruch 1, das die folgenden Schritte umfasst, die darin bestehen:

   - den Absolutwert (ABS_PH_ANA) der Phasenverschiebung zu bilden,
   - die Ableitung (Der_ABS_PH) des Absolutwertes der Phasenverschiebung zu berechnen,
   - das Vorzeichen (Sgn_DER) der Ableitung zu berechnen und
   - den Wert (PH_EST) der wirklichen Phasenverschiebung als Funktion des Absolutwerts (ABS_PH_ANA) der Phasenverschiebung, der Ableitung (Der_ABS_PH) und ihres Vorzeichens (Sgn_DER) zu schätzen.

3. Verfahren nach einem der vorhergehenden Ansprüche, das einen Schritt umfasst, der darin besteht, die Frequenz des Wechselrichters (3) auf einen Phasenverschiebungswert zu regeln, der kleiner als ein vorgegebener Wert (CONS_PH) ist.

4. Verfahren nach Anspruch 3, wobei die Regelung durch eine digitale Verarbeitung (130) durch einen Proportional-Integral-Regler ausgeführt wird, dessen proportionaler Verstärkungswert und dessen integraler Verstärkungswert in der Weise gewählt sind, dass die Konvergenzgeschwindigkeit der Frequenz des Wechselrichters (3) zu dem vorgegebenen Wert (CONS_PH) optimiert wird.

5. Verfahren nach einem der Ansprüche 2 bis 4, das wenigstens einen Schritt des Filterns des Absolutwerts (ABS_PH_ANA) der Phasenverschiebung umfasst.

6. Verfahren nach einem der Ansprüche 2 bis 5, das die folgenden Schritte umfasst, die darin bestehen:

- die Ableitung des Absolutwerts (Der_ABS_PH) der Phasenverschiebung mit einem oberen Schwellenwert (SEUIL_H) und mit einem unteren Schwellenwert (SEUIL_B) zu vergleichen und
- ein Signal (Sgn_PH), das das Vorzeichen des Signals der Phasenverschiebung zwischen dem Strom und der Spannung repräsentiert, auszusenden,

wobei

- dann, wenn die Ableitung (Der_ABS_PH) des Absolutwerts der Phasenverschiebung größer als der obere Schwellenwert (SEUIL_H) ist, das Vorzeichen des Signals der Phasenverschiebung zwischen dem Strom und der Spannung als positiv angesehen wird und
- dann, wenn die Ableitung (Der_ABS_PH) des Absolutwerts der Phasenverschiebung kleiner als der untere Schwellenwert (SEUIL_B) ist, das Vorzeichen des Signals der Phasenverschiebung zwischen dem Strom und der Spannung als negativ angesehen wird.

7. Computerprogramm, das Programmcodebefehle enthält, um die Schritte des Verfahrens nach einem der vorhergehenden Ansprüche auszuführen, wenn das Programm auf einem Computer ausgeführt wird.

8. System zum kontaktlosen Laden durch magnetische Induktion einer Batterie (Batt) eines elektrischen Kraftfahrzeugs (30), wovon eine Empfänger-Resonanzschaltung (20) eine Empfängerspule (21) enthält, wobei das System Folgendes umfasst:

- eine Sender-Resonanzschaltung (10), die eine Senderspule (11) enthält, und
- einen Wechselrichter (3), mit dessen Anschlüssen die Senderspule (11) verbunden ist, **gekennzeichnet durch**
- eine analoge und digitale Hauptplatine (40), auf der eine analoge Schaltung (41) und eine Steuerkarte (42) angeordnet sind, wobei der Strom (U) und die Spannung (I) an den Anschlüssen der Senderspule (11) von der analogen Schaltung (41) gemessen und verarbeitet werden, die den Absolutwert (ABS_PH_ANA) der Phasenverschiebung zwischen dem Strom und der Spannung berechnet, wobei das Phasenverschiebungssignal (ABS_PH_ANA), das von der analogen Schaltung (41) ausgegeben wird, in den Eingang der digitalen Steuerkarte (42) eingegeben wird, die an ihrem Ausgang einen Frequenzstellwert (N_PWM) zu dem Wechselrichter (3) aussendet, und
- einen Analog/Digital-Umsetzer, um die Phasenverschiebung in einen digitalen Wert umzusetzen,

wobei die Steuerkarte (42) konfiguriert ist, die Frequenz der Kommutationsstellwerte, die zu dem Wechselrichter (3) geschickt werden, **durch** eine digitale Verarbeitung auf den Phasenverschiebungswert zu regeln, derart, dass eine magnetische Kopplung zwischen der Senderspule (11) und der Empfängerspule (21) sichergestellt werden kann, wenn das Fahrzeug (30) über der Senderspule (11) positioniert ist.

## Claims

1. Method of contactless charging of a battery (Batt) of an electric automotive vehicle (30) by magnetic induction between an emitting resonant circuit (10) comprising an emitting coil (11) of a charging device and a receiving resonant circuit (20) of the vehicle comprising a receiving coil (21), the vehicle (30) being positioned above the emitting coil (11), so as to be able to ensure magnetic coupling between the emitting coil (11) and the receiving coil (21), the method comprising steps consisting in:

- commanding (140) the electrical power supply together with the setpoints of an inverter (3) across the terminals of which is linked the emitting coil (11) according to a variable frequency,
- measuring (100) in an analog circuit the value of the current (U) and of the voltage (I) across the terminals of the emitting coil (11), and
- computing (110) the phase shift between the current (U) and the voltage (I),

**characterized in that** it furthermore comprises steps consisting in:

- converting (120) the phase shift into a numerical value, and
- slaving (130) by a digital processing the frequency of the switching setpoints dispatched to the inverter to the value of the phase shift.

**2.** Method according to Claim 1, comprising steps consisting in

- establishing the absolute value of the phase shift (ABS_PH_ANA),
- computing the derivative (Der_ABS_PH) of the absolute value of the phase shift,
- computing the sign of the derivative (Sgn_DER), and
- estimating the value of the real phase shift (PH_EST) as a function of the absolute value of the phase shift (ABS_PH_ANA), of the derivative (Der_ABS_PH), and of its sign (Sgn_DER).

**3.** Method according to either one of the preceding claims, comprising a step consisting in slaving the frequency of the inverter (3) to a phase shift value below a predetermined value (CONS_PH).

**4.** Method according to Claim 3, in which the slaving by a digital processing (130) is implemented by a proportional integral regulator the value of whose proportional gain and the value of whose integral gain are chosen so as to optimize the rate of convergence of the frequency of the inverter (3) to the predetermined value (CONS_PH).

**5.** Method according to any one of Claims 2 to 4, comprising at least one step of filtering the absolute value of the phase shift (ABS_PH_ANA).

**6.** Method according to any one of Claims 2 to 5, comprising steps consisting in

- comparing the derivative of the absolute value of the phase shift (Der_ABS_PH) with a high threshold value (THRESHOLD_H), and with a low threshold value (THRESHOLD_L),
- emitting a signal (Sgn_PH) representative of the sign of the signal of phase shift between the current and the voltage,

in which

- if the derivative (Der_ABS_PH) of the absolute value of the phase shift is greater than the high threshold value (THRESHOLD_H) then the sign of the signal of phase shift between the current and the voltage is considered to be positive, and
- if the derivative (Der_ABS_PH) of the absolute value of the phase shift is less than the low threshold value (THRESHOLD_L) then the sign of the signal of phase shift between the current and the voltage is considered to be negative.

**7.** Computer program, comprising program code instructions for the execution of the steps of the method according to any one of the preceding claims, when said program is executed on a computer.

**8.** System for contactless charging by magnetic induction of a battery (Batt) of an electric automotive vehicle (30), a receiving resonant circuit (20) of which comprises a receiving coil (21),
the system comprising:

- an emitting resonant circuit (10) comprising an emitting coil (11),
- an inverter (3) across the terminals of which is linked the emitting coil (11), **characterized by**
- an analog and digital motherboard (40) on which are disposed an analog circuit (41) and a control board (42), the current (U) and the voltage (I) across the terminals of the emitting coil (11) being measured and processed by the analog circuit (41) which computes the absolute value (ABS_PH_ANA) of the phase shift between the current and the voltage, the phase shift signal (ABS_PH_ANA) arising from the analog circuit (41) being injected as input into the digital control board (42) which emits as output a frequency setpoint (N_PWM) to the inverter (3), and
- an analog-digital converter for converting the phase shift into a numerical value,

the control board (42) being configured so as to slave by a digital processing the frequency of the switching setpoints dispatched to the inverter (3) to the value of the phase shift, so as to be able to ensure magnetic coupling between the emitting coil (11) and the receiving coil (21) when the vehicle (30) is positioned above the emitting coil (11).

FIGURE 8

FIGURE 1

FIGURE 2

FIGURE 3

FIGURE 4

FIGURE 5

FIGURE 6

FIGURE 7A

FIGURE 7B

FIGURE 9

**EP 2 790 957 B1**

## RÉFÉRENCES CITÉES DANS LA DESCRIPTION

**Documents brevets cités dans la description**

- EP 2317624 A